# EUROPEAN PATENT APPLICATION

(11) **EP 3 599 065 A1**
(43) Date of publication of application: **29.01.2020**
(21) Application number: 19196962.5
(22) Date of filing: 23.01.2019
(51) Int. Cl.: B25J 9/16, B25J 11/00, G06N 3/00

(54) **COMMUNICATION ROBOT AND CONTROL PROGRAM THEREFOR**

(30) Priority: 31.01.2018 JP 2018014686
(62) Divisional of application: 19153174.8
(71) Applicant: TOYOTA JIDOSHA KABUSHIKI KAISHA, Aichi-ken, 471-8571 (JP)
(72) Inventor: FUNAZUKURI, Mina, Toyota-shi, Aichi-ken,, 471-8571 (JP); KAKU, Wataru, Toyota-shi, Aichi-ken,, 471-8571 (JP); YOSHIZAWA, Shintaro, Toyota-shi, Aichi-ken,, 471-8571 (JP)
(74) Representative: Winter, Brandl, Fürniss, Hübner, Röss, Kaiser, Polte - Partnerschaft mbB

(57) **Abstract**

A communication robot controls a line-of-sight direction by changing at least one of an orientation of a head part and a position of a black eye. In the communication robot, in order to direct the line-of-sight direction to a reference direction of a communication target, when the reference direction is included in a specified range previously determined for a current line-of-sight direction, a control unit directs the line-of-sight direction to the reference direction by changing the position of the black eye without changing the orientation of the head part, whereas when the reference direction is not included in the specified range, the control unit directs the line-of-sight direction to the reference direction by changing both the orientation of the head part and the position of the black eye.

## Description

### BACKGROUND

The present disclosure relates to a communication robot and a control program therefor.

A communication robot in which a head part is moved relative to a body part and an eyeball part provided on the head part is also moved to direct a line-of-sight to a user who is a communication target is known (see, for example, Japanese Unexamined Patent Application Publication No. 2007-130691).

### SUMMARY

In the communication robot disclosed in Japanese Unexamined Patent Application Publication No. 2007-130691, a ratio of operating the head part to operating the eyeball part is set, and the line-of-sight is adjusted by operating the head part and the eyeball part all the time. However, the user may feel such a line-of-sight adjustment unnatural depending on a relative positional relationship between the user and the communication robot and the situation of the communication. For example, such a communication robot sometimes gives an impression of glaring or a restless impression.

The present disclosure has been made in order to solve such a problem. An object of the present disclosure is to provide a communication robot and a control program therefor for adjusting a line-of-sight direction in order to give a natural impression to a user.

A first aspect of the present disclosure is a communication robot including: a body part; a head part configured to be able to change its orientation with respect to the body part; an eyeball part provided on the head part and configured to be able to change a position of a black eye; a control unit configured to control a line-of-sight direction by changing at least one of the orientation of the head part and the position of the black eye; and an acquisition unit configured to acquire a reference direction of a communication target. In order to direct the line-of-sight direction to the reference direction, when the reference direction is included in a specified range previously determined for a current line-of-sight direction, the control unit directs the line-of-sight direction to the reference direction by changing the position of the black eye without changing the orientation of the head part whereas when the reference direction is not included in the specified range, the control unit directs the line-of-sight direction to the reference direction by changing both the orientation of the head part and the position of the black eye. The communication robot gives an impression of a more natural expression to a user by adjusting the line-of-sight direction in this manner, and does not give an impression of unintentionally glaring.

A second aspect is a communication robot including: a body part; a head part configured to be able to change its orientation with respect to the body part; an eyeball part provided on the head part and configured to be able to change a position of a black eye; a control unit configured to control a line-of-sight direction by changing at least one of the orientation of the head part and the position of the black eye; and an acquisition unit configured to acquire a reference direction of a communication target. In order to direct the line-of-sight direction to the reference direction, the control unit can execute one of first control and second control, in which in the first control, the control unit directs the line-of-sight direction to the reference direction by changing the position of the black eye without changing the orientation of the head part and then changing both the orientation of the head part and the position of the black eye, and in the second control, the control unit directs the line-of-sight direction to the reference direction by changing both the orientation of the head part and the position of the black eye and then changing the position of the black eye without changing the orientation of the head part. In addition to the first aspect, the communication robot can give the user an impression of a more natural expression by the adjustment of the line-of-sight direction by the above-described first control and the second control.

In this case, when the reference direction is included in a specified range previously determined for a current line-of-sight direction, the control unit directs the line-of-sight direction to the reference direction by changing the position of the black eye without changing the orientation of the head part, whereas when the reference direction is not included in the specified range, the control unit directs the line-of-sight direction to the reference direction by executing the first control or the second control. Energy consumption can be effectively reduced by not changing the orientation of the head part as much as possible within the range that gives an impression of a natural expression.

The communication robot according to the first and second aspects further includes an utterance unit configured to utter to the communication target. The control unit may direct the line-of-sight direction to the reference direction at a timing when the utterance unit starts uttering. The communication robot according to the first and second aspects further includes a detection unit configured to detect an utterance of the communication target. The control unit directs the line-of-sight direction to the reference direction at a timing when the detection unit detects the utterance of the communication target. By adjusting the line-of-sight direction at such a timing, it is possible to give an impression of a more natural eye movement to the user.

When both the orientation of the head part and the position of the black eye are changed, the control unit may control the orientation of the head part and the position of the black eye in such a way that the orientation of the head part follows the line-of-sight direction after a delay. By making the changes of the orientation of the head part and the position of the black eye cooperate with each other, an impression of a more natural eye movement can be given.

A third aspect is a control program for controlling a communication robot comprising a body part, a head part configured to be able to change its orientation with respect to the body part, and an eyeball part provided on the head part and configured to be able to change a position of a black eye. The control program causes a computer to execute: acquiring a reference direction of a communication target; evaluating whether the reference direction is included in a specified range previously determined for a current line-of-sight direction determined by the orientation of the head part and the position of the black eye; performing first control, when it is evaluated that the reference direction is included inside the specified range previously determined for the current line-of-sight direction, by changing the position of the black eye without changing the orientation of the head part in order to direct the line-of-sight direction to the reference direction; and performing second control, when it is evaluated that the reference direction is included inside the specified range previously determined for the current line-of-sight direction, by changing both the orientation of the head part and the position of the black eye in order to direct the line-of-sight direction to the reference direction.

A fourth aspect is a control program for controlling a communication robot comprising a body part, a head part configured to be able to change its orientation with respect to the body part, and an eyeball part provided on the head part and configured to be able to change a position of a black eye. The control program causes a computer to execute: acquiring a reference direction of a communication target; and directing a line-of-sight direction determined by the orientation of the head part and the position of the black eye to the reference direction by changing the position of the black eye without changing the orientation of the head part and then changing both the orientation of the head part and the position of the black eye.

A fifth aspect is a control program for controlling a communication robot comprising a body part, a head part configured to be able to change its orientation with respect to the body part, and an eyeball part provided on the head part and configured to be able to change a position of a black eye. The control program causes a computer to execute: acquiring a reference direction of a communication target; and directing a line-of-sight direction determined by the orientation of the head part and the position of the black eye to the reference direction by changing both the orientation of the head part and the position of the black eye and then changing the position of the black eye without changing the orientation of the head part.

As described so far, the communication robot controlled by the control programs according to the third, fourth, and fifth aspects can give an impression of a natural expression to the user like the communication robot according to the first and second aspects does.

According to the present disclosure, it is possible to provide communication robot and a control program therefor for adjusting a line-of-sight direction in order to give a natural impression to a user.

The above and other objects, features and advantages of the present disclosure will become more fully understood from the detailed description given hereinbelow and the accompanying drawings which are given by way of illustration only, and thus are not to be considered as limiting the present disclosure.

### BRIEF DESCRIPTION OF DRAWINGS

Fig. 1 is a schematic view of a robot according to a first embodiment;
Fig. 2A is a view showing an example of communication with the robot;
Fig. 2B is a view showing an example of communication with the robot;
Fig. 3 is a system configuration diagram of the robot;
Fig. 4 is a perspective view showing a structure of a right eye;
Fig. 5 is a view for describing control of a line-of-sight direction;
Fig. 6 is a view for describing line-of-sight adjustment inside a specified range;
Fig. 7 is a view for describing first line-of-sight adjustment to the outside of a specified range;
Fig. 8 is a view for describing second line-of-sight adjustment to the outside of a specified range;
Fig. 9 is a view for describing third line-of-sight adjustment to the outside of a specified range;
Fig. 10 is a view for describing a first change in the line-of-sight direction and an orientation of a head part;
Fig. 11 is a view for describing a second change in the line-of-sight direction and the orientation of the head part;
Fig. 12 is a flowchart showing a procedure of line-of-sight direction adjustment processing;
Fig. 13 is a flowchart showing a procedure of adjustment processing to the outside of the specified range; and
Fig. 14 is a schematic view of a robot according to a second embodiment.

### DESCRIPTION OF EMBODIMENTS

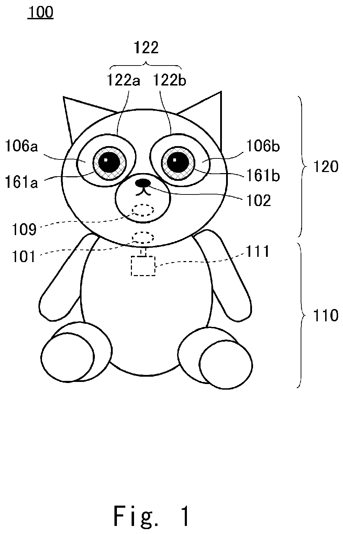

Fig. 1 is a schematic view of a robot 100 according to a first embodiment of the present disclosure. The robot 100 is a communication robot that conducts a voice dialogue with a human being who is a user. The robot 100 is a character apparatus that embodies a character. An expression of the robot 100's eyes and a line-of-sight direction change in accordance with the dialogue.

An appearance of the robot 100 imitates an animal, and includes a body part 110 and a head part 120. A motor 111 is included inside the body part 110. An orientation of the head part 120 changes with respect to the body part 110 by the driving of the motor 111. In the head part 120, eyeball parts 122 (a right eye 122a and a left eye 122b) are provided at positions that the user can recognize them as eyes. The structure of the eyeball part 122 will be described in detail later. Display panels 106 (a display panel for the right eye 106a and a display panel for the left eye 106b), which are, for example, liquid crystal panels or organic EL panels, are installed behind the right eye 122a and the left eye 122b. Black eye images 161 (a right black eye image 161a and a left eye black eye image 161b) are displayed on the display panels 106.

A camera 102 is disposed inconspicuously at a position of a nose of the robot 100. The camera 102 includes, for example, a CMOS sensor, and functions as an imaging unit that captures an image for recognizing an external environment. A speaker 109 is disposed in a hidden manner at a position of a mouth of the robot 100. The speaker 109 functions as an utterance output unit that outputs sounds generated by the robot 100. The user feels as if the robot 100 is talking by the sounds output from the position of the mouth. A microphone 101 is disposed in a hidden manner at any position of the head part 120. The microphone 101 functions as a detection unit that detects uttered voices of the user.

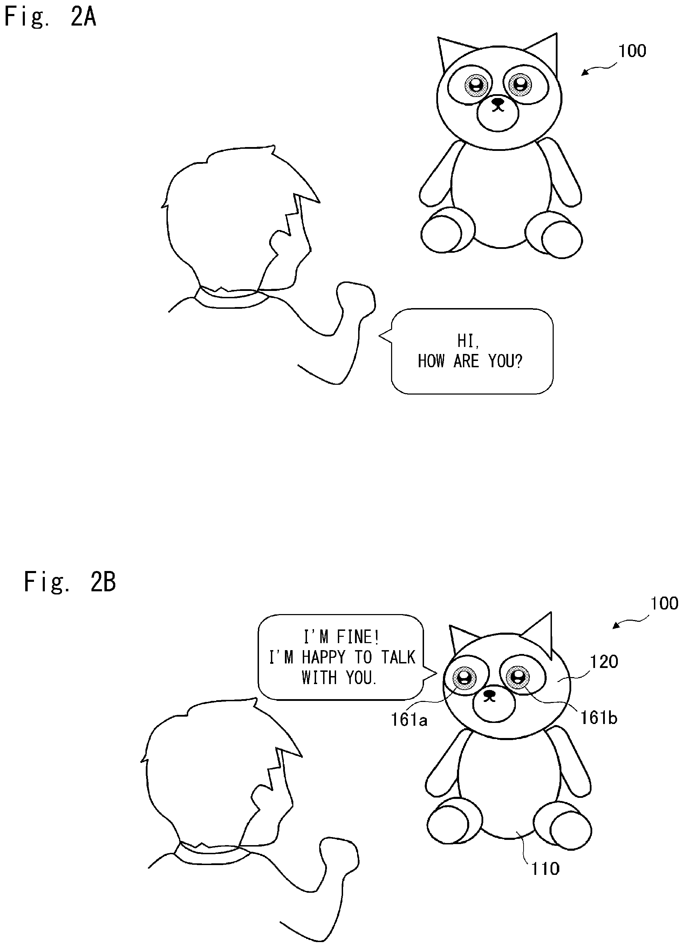

Figs. 2A and 2B are views showing an example of communication between the user and the robot 100. As shown in Fig. 2A, for example, when the user speaks to the robot 100, "Hi, how are you?", then as shown in Fig. 2B, in response to the user's voice, the robot 100 directs its line-of-sight to the user and utters, for example, "I'm fine, I am happy to talk with you". The change in the line-of-sight is achieved by changing at least one of the orientation of the head part 120 with respect to the body part 110 and the positions of the right black eye image 161a and the left black eye image 161b. Details will be described later.

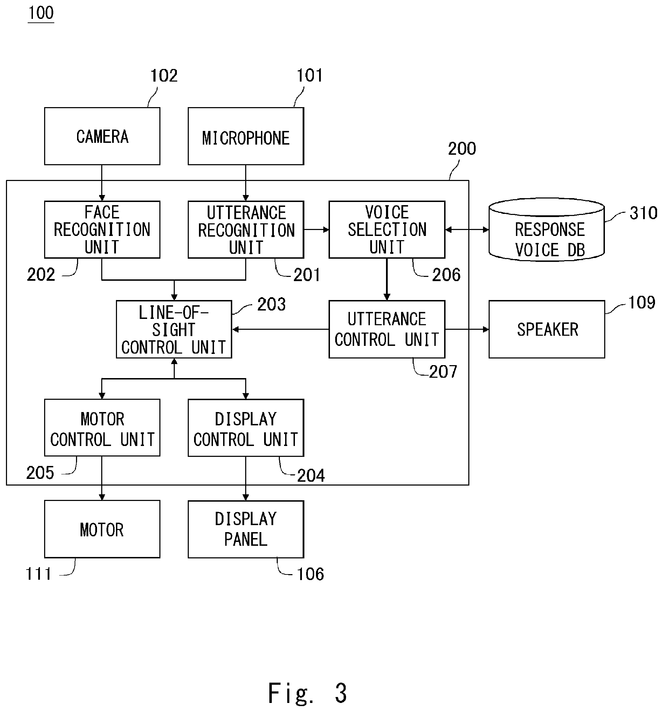

Fig. 3 is a system configuration diagram of the robot 100. Main system components of the robot 100 include the microphone 101, the camera 102, the display panels 106, the speaker 109, the motor 111, a control unit 200, and a response voice DB 310. The control unit 200 is composed of, for example, a CPU and also functions as a function execution unit that executes each function. The control unit 200 mainly functions an utterance recognition unit 201, a face recognition unit 202, a line-of-sight control unit 203, a display control unit 204, a motor control unit 205, a voice selection unit 206, and an utterance control unit 207.

A main function of the microphone 101 is to collect uttered voices of the user who is a partner of the robot 100 having a dialogue with. The microphone 101 converts the uttered voice of the user, which has been collected, into a voice signal and delivers it to the utterance recognition unit 201.

The utterance recognition unit 201 analyzes the voice signal received from the microphone 101 and recognizes an utterance of the user. The utterance recognition unit 201 and the microphone 101 cooperate with each other to function as an utterance acquisition unit that acquires a user's utterance to talk with the robot 100. Specifically, the utterance recognition unit 201 recognizes the user's uttered content by a common voice recognition technique. The utterance recognition unit 201 delivers the recognized uttered content to the voice selection unit 206.

The voice selection unit 206 selects a sentence suitable as a conversation for the user's uttered content recognized by the utterance recognition unit 201, collects utterance data corresponding to the selected sentence from the response voice DB 310, and delivers the utterance data to the utterance control unit 207.
The response speech DB 310 is a database of response voices connected to the voice selection unit 206, and is composed of, for example, a recording medium of a hard disc drive. The response voice DB 310 is organized, for example, as a corpus. Each term in the response voice DB 310 is stored with reproducible utterance data.

The utterance control unit 207 converts the received utterance data into a voice signal and deliver it to the speaker 109. The voice selection unit 206 and the utterance control unit 207 cooperate with each other to function as a voice generation unit that generates a response voice based on the user's uttered content. The speaker 109 receives the voice signal converted by the utterance control unit 207 and outputs the response voice as a sound.

The utterance recognition unit 201 delivers a timing at which the user started uttering to the line-of-sight control unit 203. Further, the utterance control unit 207 delivers a timing at which the response voice is output to the line-of-sight control unit 203. The line-of-sight control unit 203 executes adjustment of the line-of-sight direction in synchronization with such timing information.

A main function of the camera 102 is to photograph the user who communicates with the robot 100. The camera 102 converts the photographed image into an image signal and delivers the image signal to the face recognition unit 202.

The face recognition unit 202 analyzes the image signal received from the camera 102 and recognizes the user's face who the robot 100 communicates with. The face recognition unit 202 decides a reference direction of the user from the extracted face areas. The reference direction is, for example, a direction from the robot 100 to a midpoint connected between the eyes of the user. The face recognition unit 202 functions as an acquisition unit for acquiring the reference direction of the user in cooperation with the camera 102.

In order to decide the reference direction, distance information on the distance from the robot 100 to the user's face is necessary, because the reference direction is represented by a vector in a three-dimensional space. For example, when the camera 102 is composed of a stereo camera, the distance information can be calculated from an amount of displacement between images, while when the camera 102 is composed of a camera that is sensitive to infrared rays, the distance information can be calculated from distortion of a projected infrared pattern. Put more simply, an approximate distance can be estimated from the size of the face area or the distance to the user in a situation where the robot 100 communicates with the user 100 may be defined as a certain distance. That is, a method of acquiring the distance information may be selected according to the specification of the robot 100.

The line-of-sight control unit 203 performs control to direct the line-of-sight direction to the reference direction received from the face recognition unit 202 in synchronization with the timing received from the utterance recognition unit 201, the utterance control unit 207, or another timing. Specifically, as will be described later, the line-of-sight control unit 203 decides change amounts to cause the positions of the black eye images 161 to change and the orientation of the head part 120 to change in order to match the line-of-sight direction with the reference direction, and then delivers them to the display control unit 204 and the motor control unit 205.

The display control unit 204 moves the positions of the black eye images 161 on the display panels 106 according to the change amounts of the positions of the black eye images 161 received from the line-of-sight control unit 203. The display control unit 204 generates intermediate display images in stages according to the magnitude of the received change amount, i.e., the distance to move the black eye images 161, and displays the black eye images 161 as an animation. The motor control unit 205 drives the motor 111 according to the change amount of the orientation of the head part 120 received from the line-of-sight control unit 203. The line-of-sight control unit 203, the display control unit 204, and the motor control unit 205 cooperate with each other to thereby collectively function as a control unit for controlling the line-of-sight direction.

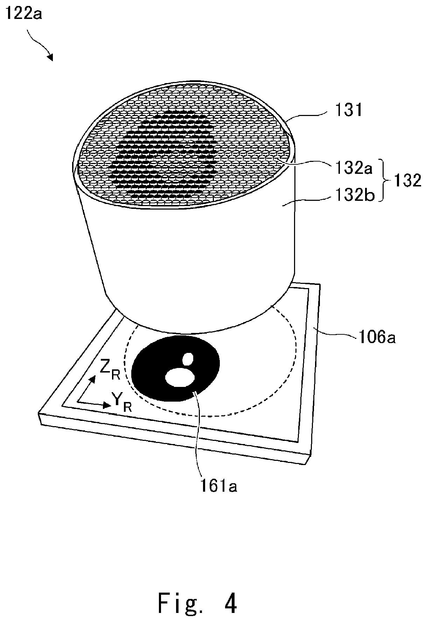

Fig. 4 is a perspective view showing the structure of the right eye 122a. The left eye 122b has the same structure as that of the right eye 122a. The display control unit 204 controls display of each of the display panels.

The right eye 122a is mainly composed of a translucent cover 131, an optical fiber bundle 132, and the display panel for the right eye 106a. The translucent cover 131 is molded from, for example, transparent polycarbonate, and plays a role as an exterior material of the head part 120. It is natural for surfaces of eyes of a robot imitating an animal or a human being to be curved, which is easily accepted by the user. Therefore, in the robot 100 according to this embodiment, the translucent cover 131 corresponding to the surface of the eye is formed into a convex curved surface toward the outside.

The display panel 106 for displaying the right black eye image 161a, which is a designed symbol of a right black eye, is installed on the rear side of the right eye 122a. The display surface of the right eye display panel 106a is flat. Further, the display surface has a size that accommodates an outer periphery of the translucent cover 131. In the drawing, the right black eye image 161a is displayed at a position deviated from a white eye of a size corresponding to the outer periphery of the translucent cover 131.

Although the black eye displayed in this embodiment is a part corresponding to, if the robot is a living human being, a cornea including an iris and a pupil. However, as the black eye displayed in this embodiment is designed and displayed, eyes of a living human being may be partially omitted or exaggerated. The black eye may be decorated in such a way not possible in a living human being. The black eye may include an animation that involves opening and closing the eye. In any case, the black eye displayed in this embodiment may be a symbol that enables the user who the robot 100 communicates with to recognize it as an eye expression.

Central coordinates C_{R}(Y_{R0}, Z_{R0}) are defined in the right black eye image 161a. The display control unit 204 determines a display position of the right black eye image 161a by matching the central coordinates C_{R} with display coordinates in a right eye coordinate system Y_{R}-Z_{R} set for the right eye display panel 106a. When the display control unit 204 changes the display position of the right black eye image 161a from the currently displayed display position to a target position, it switches the display image currently displayed on the right eye display panel 106a to a display image with target coordinates centered at the central coordinates C_{R}. At this time, the display control unit 204 determines intermediate coordinates in stages between the current display coordinates and the target coordinates and sequentially generates and displays intermediate images in such a way that central coordinates C_{R} thereof match the respective intermediate coordinates. A more realistic line-of-sight movement can be achieved by sequentially displaying the intermediate images, because the transition of the line-of-sight can be expressed as an animation.

An inner curved surface of the translucent cover 131 and the surface of the display panel for the right eye 106a are connected by the optical fiber bundle 132. The optical fiber bundle 132 transmits the right black eye image 161a displayed on the display panel for the right eye 106a to the translucent cover 131. The optical fiber bundle 132 is a collection of optical fibers 132a corresponding one-to-one to the pixels of the display panel for the right eye 106a. Although the optical fiber bundle 132 is shown floated from the surface of the display panel for the right eye 106a in the drawing in order to describe it, one end of each optical fiber 132a is bonded to the surface of the display panel for the right eye 106a by a light guide adhesive. An outer circumferential surface of the collection of the optical fibers 132a is covered with a coating 132b to be bundled. In this manner, the translucent cover 131, the optical fiber bundle 132, and the display panel for the right eye 106a are connected to each other and integrated.

A luminous flux of the right black eye image 161a displayed on the display panel for the right eye 106a enters from one ends of the optical fibers 132a and is emitted from the other ends of the optical fibers 132a. The collection of the other end of the optical fibers 132a, which is an emission surface, forms a virtual screen along the inner curved surface of the translucent cover 131. Thus, the right black eye image 161a displayed on the display panel for the right eye 106a is observed by the user on this virtual screen.

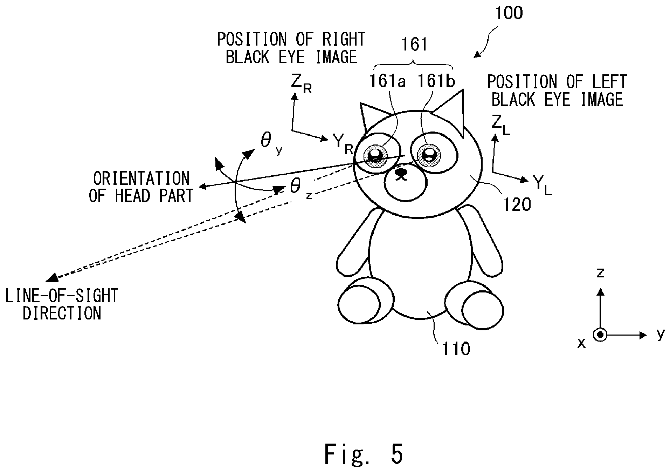

Fig. 5 is a view for describing control of the line-of-sight direction. The line-of-sight control unit 203 adjusts the line-of-sight direction of the robot 100 in such a way that the line of sight direction of the robot 100 matches the reference direction defined as described above. The line-of-sight direction is adjusted by changing at least one of the positions of the black eye images 161 and the orientation of the head part 120.

The orientation of the head part 120 is an orientation with respect to the body part 110. For example, as shown in the drawing, the orientation of the head part 120 is defined as a normal direction on the surface at the center of the face part. When the entire coordinate system x-y-z with respect to the body part 110 is defined as shown the drawing, the head part 120 can be rotated in a yaw axis direction θ_{y} and a pitch axis direction θ_{z} direction by the driving of the motor 111. That is, the motor control unit 205 can adjust the orientation of the head part 120 by rotating the head part 120 in the yaw axis direction θ_{y} and the pitch axis direction θ_{z} direction.

As described above, the position of the right black eye image 161a is determined by the display coordinates in the right eye coordinate system Y_{R}-Z_{R}. Likewise, the position of the left black eye image 161b is determined by the display coordinates in a left eye coordinate system Y_{L}-Z_{L}. The line-of-sight direction is set by the orientation of the head part 120 and the positions of the right black eye image 161a and the left black eye image 161b. At this time, the central coordinates C_{R} and C_{L} of the right black eye image 161a and the left black eye image 161b, respectively, are located on a straight line connected between the respective virtual eyeball centers and a gazing point in the line-of-sight direction. By adjusting the orientation of the head part 120 and the positions of the right black eye image 161a and the left black eye image 161b in this manner, the impression that the robot 100 directs the line-of-sight to a specific direction is given to the user.

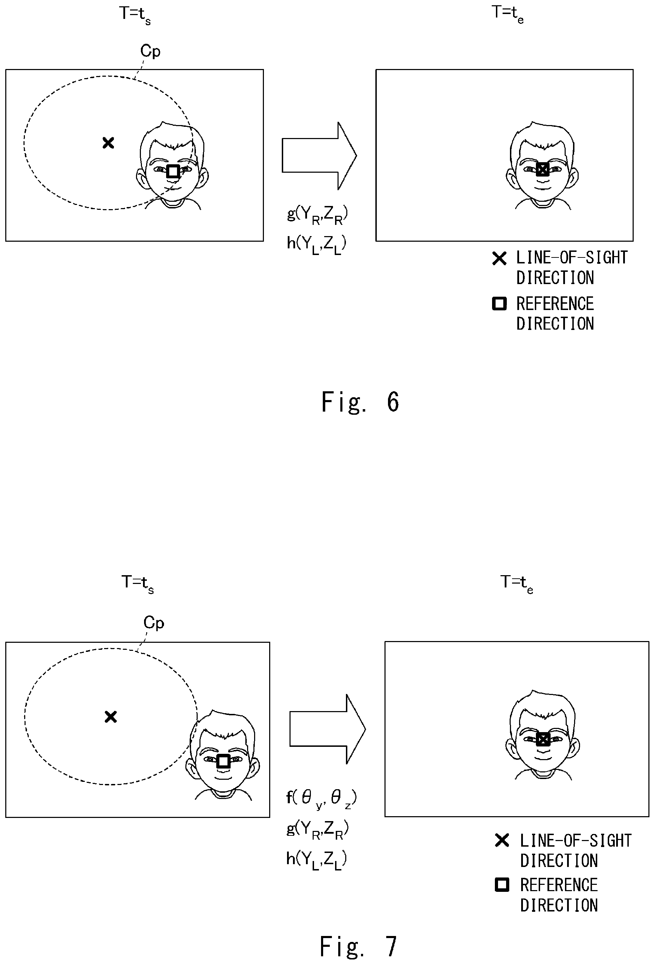

Next, control for adjusting the line-of-sight direction will be described. Fig. 6 is a view for describing the line-of-sight adjustment inside a predetermined specified range Cₚ. The left drawing shows an image photographed by the camera 102 at the present time T=tₛ, and a center of the image substantially matches the direction of the head part 120. "□" indicates the reference direction decided by the face recognition unit 202, and "×" indicates the line-of-sight direction at the present time. The line-of-sight control unit 203 adjusts the line-of-sight direction to direct the line-of-sight direction to the reference direction, with an aim of matching "×" with "□".

At the present time T=tₛ, the line-of-sight direction does not match the reference direction, but the reference direction is present relatively close to the line-of-sight direction and is included in the predetermined specified range Cₚ. In such a situation, the line-of-sight control unit 203 adjusts the line-of-sight direction by changing the positions of the black eye images 161 without changing the orientation of the head part 120. That is, the line-of-sight control unit 203 calculates a change amount g(Y_{R}, Z_{R}) of the right black-eye image 161a and a change amount h (Y_{L}, Z_{L}) of the left black eye image 161b to make the line-of-sight direction match the reference direction while the head part 120 is fixed and delivers the calculated change amounts to the display control unit 204. The change amount g(Y_{R}, Z_{R}) represents an amount of a translational movement of the central coordinates C_{R} of the right black eye image 161a on the right eye display panel 106a in the Y_{R} axis direction and the Z_{R} axis direction. Likewise, the change amount h(Y_{L}, Z_{L}) represents an amount of a translational movement of the central coordinate C_{L} of the left black eye image 161b on the left eye display panel 106b in the Y_{L} axis direction and the Z_{L} axis direction. The display control unit 204 moves the display positions of the right black eye image 161a and the left black eye image 161b according to the change amounts g(Y_{R}, Z_{R}) and h(Y_{L}, Z_{L}) to make the line-of-sight direction match the reference direction at the time T=tₑ, as shown in the right drawing.

The specified range Cₚ is determined as a range that does not give an unnatural impression such as glaring even when the line-of-sight direction is adjusted by changing only the black eye images 161. The size of the specified range Cₚ is decided in advance according to various factors such as the property of the robot 100 as the character and the sizes of the eyeball parts 122 with respect to the head part 120.

The power for driving the motor 111 can be reduced by not changing the orientation of the head part 120 in the adjustment of the line-of-sight direction inside the specified range Cₚ. Further, it is also possible to prevent a driving sound of the motor 111 from interfering with sound collection of the microphone 101. Furthermore, it is convenient in terms of image analysis, because the capturing direction of the camera 102 is fixed.

Fig. 7 is a view for describing first line-of-sight adjustment to the outside of the specified range Cₚ. The left drawing shows an image photographed by the camera 102 at the present time T=tₛ, and a center of the image substantially matches the orientation of the head part 120. In a manner similar to Fig. 6, "□" indicates the reference direction decided by the face recognition unit 202, and "×" indicates the line-of-sight direction at the present time. The line-of-sight control unit 203 adjusts the line-of-sight direction to direct the line-of-sight direction to the reference direction, with an aim of matching "×" with "□".

At the present time T=tₛ, the line-of-sight does not match the reference direction, and the reference direction is present relatively far from the line-of-sight direction and is not included in the predetermined specified range Cₚ. A first line-of-sight adjustment method in such a situation is that the line-of-sight control unit 203 adjusts the line-of-sight direction by changing both the orientation of the head part 120 and the positions of the black eye images 161. That is, the line-of-sight control unit 203 calculates a change amount f(θ_{y}, θ_{z}) of the head part 120, a change amount g(Y_{R}, Z_{R}) of the right black-eye image 161a, and a change amount h(Y_{L}, Z_{L}) of the left black eye image 161b to make the line-of-sight direction match the reference direction while the head part 120 is fixed and delivers the calculated change amounts to the motor control unit 205 and the display control unit 204.

The change amount f(θ_{y}, θ_{z}) represents a rotation angle that the head part 120 rotates in the yaw axis direction θ_{y} and the pitch axis direction θ_{z} direction with respect to the body part 110. The change amount g(Y_{R}, Z_{R}) represents an amount of a translational movement of the central coordinates C_{R} of the right black eye image 161a on the right eye display panel 106a in the Y_{R} axis direction and the Z_{R} axis direction. Likewise, the change amount h(Y_{L}, Z_{L}) represents an amount of a translational movement of the central coordinate C_{L} of the left black eye image 161b on the left eye display panel 106b in the Y_{L} axis direction and the Z_{L} axis direction. The display control unit 204 moves the display positions of the right black eye image 161a and the left black eye image 161b according to the change amounts g(Y_{R}, Z_{R}) and h(Y_{L}, Z_{L}). The motor control unit 205 rotates the head part 120 according to the change amount f(θ_{y}, θ_{z}). As shown in the right drawing, the line-of-sight direction can be made to match the reference direction at the time T=tₑ through these operations.

At this time, the movements of the right black eye image 161a and the left black eye image 161b are adjusted in such a way that they start at the time T=tₛ and end at the time T=tₑ. Likewise, the rotation of the head part 120 is adjusted in such a way that it starts at the time T=tₛ and ends at the time T=tₑ. That is, the adjustment is made in such a way that the movements of the black eye images 161 and the rotation of the head part 120 start at the same time and end at the same time. By synchronizing the movements of the black eye images 161 with the rotation of the head part 120, it is possible to give a more natural impression as a change in the line-of-sight direction to the user. Note that an allocation of the contribution to the change in the line-of-sight direction by the rotation of the head part 120 and the contribution to the change in the line-of-sight direction by the movements of the black eye images 161 is decided in advance based on various factors such as the property of the robot 100 as the character and the sizes of the eyeball parts 122 with respect to the head part 120.

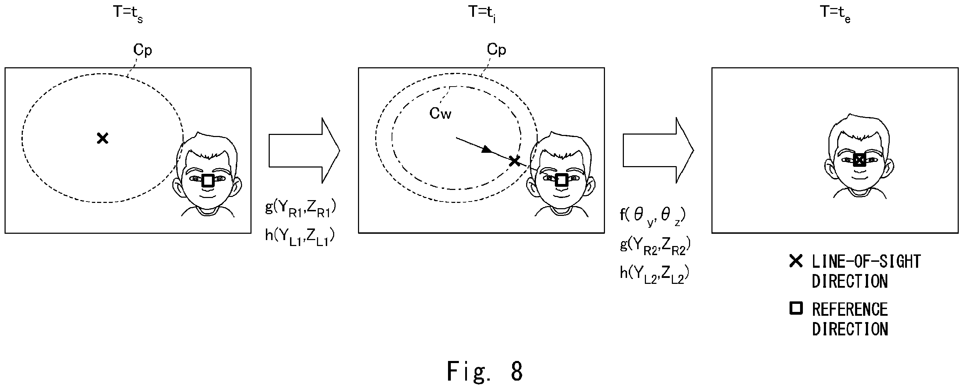

Fig. 8 is a view for describing second line-of-sight adjustment to the outside of the specified range Cₚ. The left drawing shows an image photographed by the camera 102 at the present time T=tₛ, which is the same situation as that shown in the left drawing of Fig. 7. The line-of-sight control unit 203 adjusts the line-of-sight direction to direct the line-of-sight direction to the reference direction, with an aim of matching "×" with "□". A second line-of-sight adjustment method in such a situation is that the line-of-sight control unit 203 changes the positions of the black eye images 161 without changing the orientation of the head part 120 until halfway through the adjustment, and then changes both the orientation of the head part 120 and the positions of the black eye images 161 to adjust the line-of-sight direction. That is, the line-of-sight control unit 203 sets an intermediate target to make the line-of-sight direction match the reference direction and firstly calculates a change amount g(Y_{R1}, Z_{R1}) of the right black eye image 161a and a change amount h(Y_{L1}, Z_{L1}) of the black eye image 161b in order to achieve the line-of-sight direction at the intermediate target. The change amount f(θ_{y}, θ_{z}) of the head part 120, the change amount g(Y_{R2}, Z_{R2}) of the right black eye image 161a, and the change amount h(θR) of the left black eye image 161b for making the line-of-sight direction at the intermediate target match the reference direction (Y_{L2}, Z_{L2}). The line-of-sight control unit 203 delivers these change amounts to the motor control unit 205 and the display control unit 204.

The display control unit 204 starts moving the display positions of the right black eye image 161a and the left black eye image 161b at the time T=tₛ and ends the movements of the change amounts g(Y_{R1}, Z_{R1}) and h(Y_{L1}, Z_{L1}) at the time T=tᵢ. The line-of-sight direction at the intermediate target achieved at the time T=tᵢ is inside the specified range Cₚ as indicated by "×" in the middle drawing. The display control unit 204 sets the line-of-sight direction at the intermediate target as a direction that faces a point where a line segment connecting the line-of-sight direction at T=tₛ to the reference direction intersects with an inclusion range C_{w}. The inclusion range C_{w} here is set as a range of 60% or more and less than 90% of the size of the specified range Cₚ. Next, the motor control unit 205 and the display control unit 204 start the rotation of the head part 120 and the movements of the display positions of the right black eye image 161a and the left black eye image 161b at the time T=tᵢ. Then, the rotation corresponding to the change amount f(θ_{y}, θ_{z}) and the movements of the change amount g(Y_{R2}, Z_{R2}) and h(Y_{L2}, Z_{L2}) are ended at the time T=tₑ. As shown in the right drawing, the line-of-sight direction can be made to match the reference direction at the time T=tₑ through these operations.

It is possible to give the user a natural impression as a change in the line-of-sight direction by linking the rotation of the head part 120 to the movements of the black eye images 161 in this manner. Note that in the latter half of the operation where the rotation of the head part 120 and the movements of the black eye images 161 are performed at the same time, an allocation of the contribution to the change in the line-of-sight direction by the rotation of the head part 120 and the contribution to the change in the line-of-sight direction by the movements of the black eye images 161 is decided in a manner similar to that in the first line-of-sight adjustment.

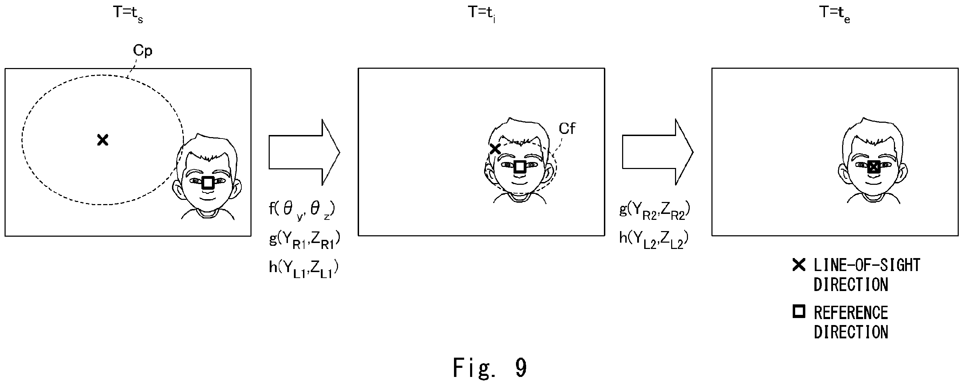

Fig. 9 is a view for describing third line-of-sight adjustment to the outside of the specified range Cₚ. The left drawing shows an image photographed by the camera 102 at the present time T=tₛ, which is the same situation as the left drawing of Fig. 7. The line-of-sight control unit 203 adjusts the line-of-sight direction to direct the line-of-sight direction to the reference direction, with an aim of matching "×" with "□". A third line-of-sight adjustment method in such a situation is that the line-of-sight control unit 203 changes both the orientation of the head part 120 and the positions of the black eye images 161 until halfway through the adjustment, and then changes the positions of the black eye images 161 without changing the orientation of the head part 120 to adjust the line-of-sight direction. That is, the line-of-sight control unit 203 sets an intermediate target to make the line-of-sight direction match the reference direction and firstly calculates a change amount f(θ_{y}, θ_{z}) of the head part 120, a change amount g(Y_{R1}, Z_{R1}) of the right black eye image 161a, and a change amount h(Y_{L1}, Z_{L1}) of the left black eye image 161b in order to achieve the line-of-sight direction at the intermediate target. Then, the line-of-sight control unit 203 calculates the change amount g(Y_{R2}, Z_{R2}) of the right black eye image 161a and the change amount h(Y_{L2}, Z_{L2}) of the left black eye image 161b for making the line-of-sight direction at the intermediate target match the reference direction. The line-of-sight control unit 203 delivers these change amounts to the motor control unit 205 and the display control unit 204.

The motor control unit 205 and the display control unit 204 start the rotation of the head part 120 and the movements of the display positions of the right black eye image 161a and the left black eye image 161b at the time T=tₛ. Then, the rotation of the change amount f(θ_{y}, θ_{z}) and the movements of the change amounts g(Y_{R1}, Z_{R1}) and h(Y_{L1},Z_{L1}) are ended at the time T=tᵢ. The line-of-sight direction at the intermediate target achieved at the time T=tᵢ is set as a direction facing a point on a close to a neighboring range Cf, which is set near a face area of the user, with respect to the reference direction as indicated by "×" in the middle drawing. Next, at the time T= tᵢ, the display control unit 204 starts moving the display positions of the right black eye image 161a and the left black eye image 161b, and at the time T=tₑ, the movements of the change amounts g(Y_{R2}, Z_{R2}) and h(Y_{L2}, Z_{L2}) are ended. As shown in the right drawing, the line-of-sight direction can be made to match the reference direction at the time T=tₑ through these operations.

By linking the rotation of the head part 120 to the movements of the black eye images 161 in this manner, it is possible to give a natural impression as a change in the line-of-sight direction to the user. Note that in the first half operation where the rotation of the head part 120 and the movements of the black eye images 161 are performed at the same time, an allocation of the contribution to the change in the line-of-sight direction by the rotation of the head part 120 and the contribution to the change in the line-of-sight direction by the movements of the black eye images 161 is decided in a manner similar to that in the first line-of-sight adjustment.

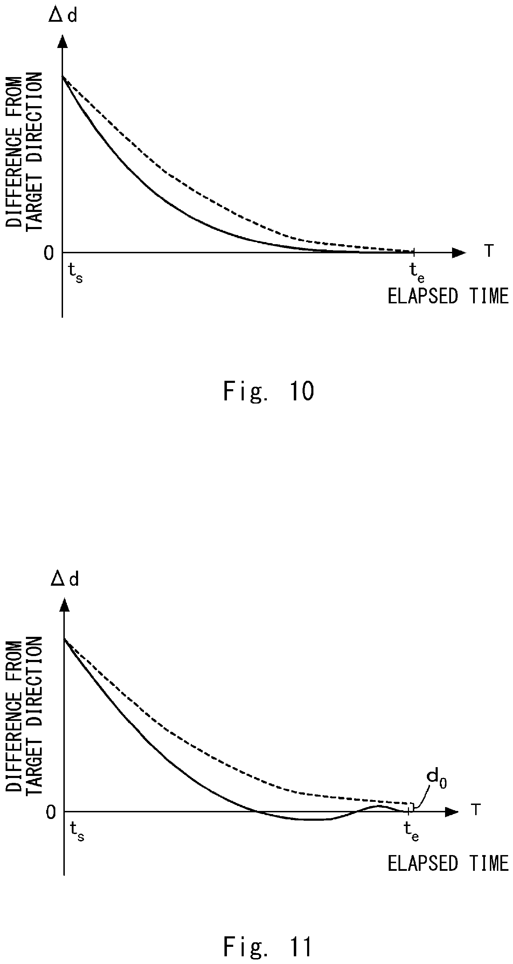

Next, a change in the line-of-sight direction and the orientation of the head part 120 when the rotation of the head part 120 and the movements of the black eye images 161 are carried out at the same time will be described. Fig. 10 is a view for describing a first change in the line-of-sight direction and the orientation of the head part 120. The horizontal axis represents an elapsed time where the rotation of the head part 120 and the movements of the black eye images 161 are started at the same time at the time T=tₛ, and ended at the same time at the time T=tₑ. The vertical axis represents a difference from a target direction. The solid line represents a difference between the line-of-sight direction and the target direction, and the dotted line represents a difference between the orientation of the head part 120 and the target direction. The drawing shows an example in which the orientation of the head part 120 matches the line-of-sight direction at the times T= tₑ and tₛ.

As shown in the drawing, the line-of-sight control unit 203 controls the rotation of the head part 120 and the movements of the black eye images 161 in such a way that the line-of-sight direction approaches the target direction earlier than the head part 120 does with respect to the elapsed time. That is, the line-of-sight control unit 203 controls the orientation of the head part 120 and the positions of the black eye images 161 in such a way that the head part 120 follows the line-of-sight direction after a delay. Such control enables the relationship between the orientation of the head part 120 and the line-of-sight direction to be approximated to that of a human being, thereby giving the user a natural impression.

Fig. 11 is a view for describing a second change in the line-of-sight direction and the orientation of the head part 120. The second change is similar to the first change in that the orientation of the head part 120 follows the line-of-sight direction after a delay. On the other hand, the second change differs from the first change in that the line-of-sight direction temporarily overshoots with respect to the target direction, and the orientation of the head part 120 is offset from the target direction to end the operation. As described above, a more realistic line-of-sight movement can be achieved by converging to the target direction in such a way that the line-of-sight direction is shifted or by not making the head part 120 face the user.

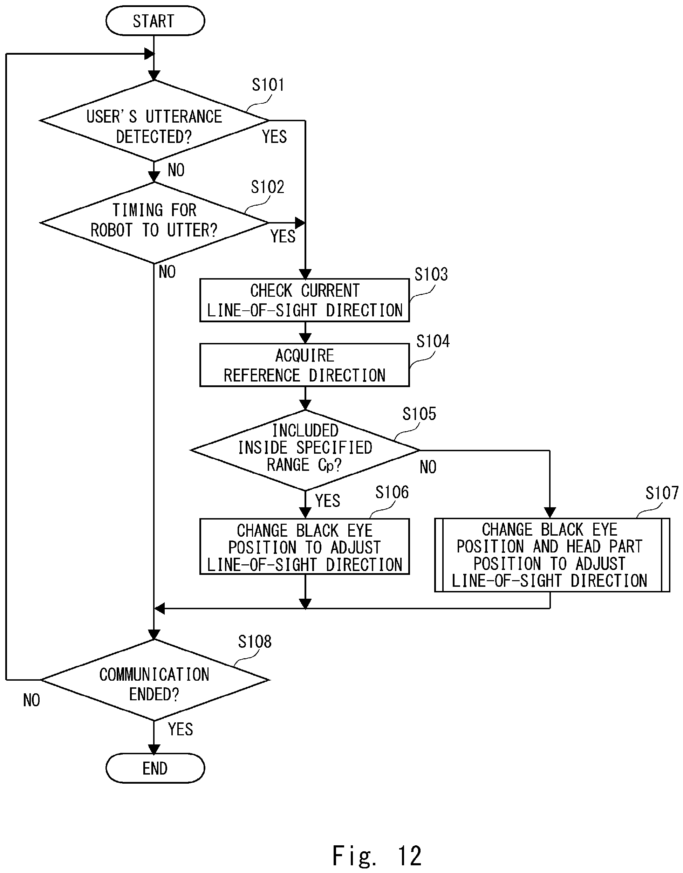

Next, a procedure of operation processing executed by the control unit 200 regarding the adjustment of the line-of-sight direction will be described. The operation processing described below is executed by the control unit 200 executing a control program read from the system memory. Fig. 12 is a flowchart showing a procedure of line-of-sight direction adjustment processing. The flow starts when the robot 100 is powered on. Note that descriptions of processing other than processing related to the adjustment of the line-of-sight direction are omitted.

In Step S101, the line-of-sight control unit 203 checks whether the utterance recognition unit 201 has detected an utterance of the user. When the utterance recognition unit 201 has detected the utterance, the process proceeds to Step S103, whereas when the utterance recognition unit 201 has not detected the utterance, the process proceeds to Step S102. In Step S102, the line-of-sight control unit 203 checks whether the utterance control unit 207 starts outputting a response voice. When the output of the response voice is to be started, the process proceeds to Step S103, whereas when the output of the response voice is not to be started, the process proceeds to Step S108.

In Step S103, the line-of-sight control unit 203 acquires current positions of the black eye images 161 from the display control unit 204 and acquires a current orientation of the head part 120 from the motor control unit 205 to check the current line-of-sight direction. Then, in Step S104, the face recognition unit 202 analyzes an image signal received from the camera 102 and acquires the reference direction for the user.

The process proceeds to Step S105 where the line-of-sight control unit 203 evaluates whether the reference direction is included inside the specified range Cₚ set for the current line-of-sight direction. When the reference direction is included inside the specified range Cₚ, the process proceeds to Step S106, whereas when the reference direction is not included inside the specified range Cₚ, the process proceeds to Step S107.

When the process proceeds to Step S106, as described with reference to Fig. 6, the line-of-sight control unit 203 executes the adjustment for directing the line-of-sight direction to the reference direction by changing the positions of the black eye images 161 without changing the orientation of the head part 120. When the adjustment is ended, the process proceeds to Step S108.

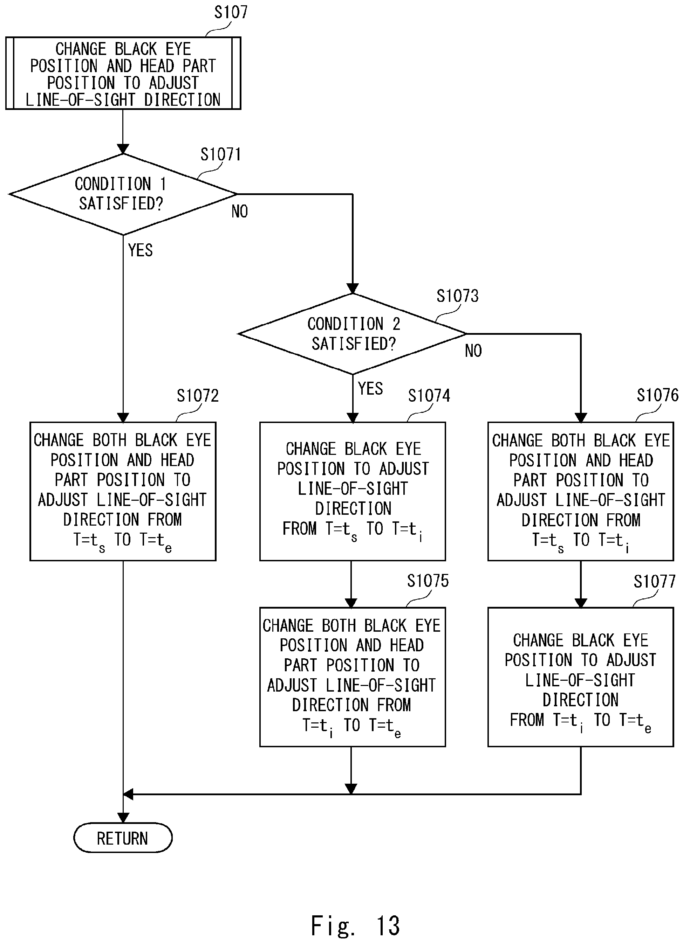

When the process proceeds to Step S107, the line-of-sight control unit 203 executes subfunctions shown in Fig. 13. The process proceeds to Step S1071 where the line-of-sight control unit 203 evaluates whether a control state of the robot 100 satisfies the condition 1. When the condition 1 is satisfied, the process proceeds to Step S1072, whereas when the condition 1 is not satisfied, the process proceeds to Step S1073. Condition 1 will be described later.

When the process proceeds to Step S1072, as described with reference to Fig. 7, the line-of-sight control unit 203 executes the adjustment to direct the line-of-sight direction to the reference direction by changing both the orientation of the head part 120 and the positions of the black eye image 161. When the adjustment is ended, the process proceeds to Step S108.

When the process proceeds to Step S1073, the line-of-sight control unit 203 evaluates whether the control state of the robot 100 satisfies the condition 2, which is different from the condition 1. When the condition 2 is satisfied, the process proceeds to step S1074, whereas when the condition is not satisfied, the process proceeds to step S1076. The condition 2 will be described later.

When the process proceeds to Step S1074, as described with reference to Fig. 8, the line-of-sight control unit 203 executes the adjustment to direct the line-of-sight direction to a direction of the intermediate target by changing the positions of the black eye images 161 without changing the orientation of the head part 120 during the period from the time T=tₛ to the time T=tᵢ.

After that, the process proceeds to Step S1075 where the line-of-sight control unit 203 executes the adjustment to direct the line-of-sight direction to the reference direction by changing both the orientation of the head part 120 and the positions of the black eye images 161 during the period from the time T=tᵢ to the time T=tₑ. When the adjustment is ended, the process proceeds to Step S108.

When the process proceeds to Step S1076, as described with reference to Fig. 9, the line-of-sight control unit 203 executes the adjustment to direct the line-of-sight direction to a direction of the intermediate target by changing both the orientation of the head part 120 and the positions of the black eye images 161 during the period from the time T=tₛ to the time T=tᵢ. After that, the process proceeds to Step S1077 where the line-of-sight control unit 203 executes the adjustment to direct the line-of-sight direction to the reference direction by changing the positions of the black eye images 161 without changing the orientation of the head part 120 during the period from the time T=tᵢ to the time T=tₑ. When the adjustment is ended, the process proceeds to Step S108.

Returning to Fig. 12, in Step S108, the line-of-sight control unit 203 determines whether the communication with the user has ended, for example, when a certain period of time in a non-conversational state has elapsed. When the control unit 200 determines that the communication with the user has not ended yet, the process returns to Step S101. When the control unit 200 determines that the communication with the user has ended, a series of processing is ended.

The condition 1 and condition 2 will be described here. The condition 1 and the condition 2 are conditions appropriately determined according to the user's uttered content, the uttered content output by the utterance control unit 207, the user's emotion read by the control unit 200, and the emotion the robot 100 desires to express, etc. For example, the adjustment of the line-of-sight direction suitable for an emotion A to be expressed is achieved by Steps S1074 and S1075, and the adjustment of the line-of-sight direction suitable for an emotion B to be expressed is achieved by Steps S1076 and S1077. In such a case, the condition 1 may be set as "the emotion to be expressed is neither A nor B", and the condition 2 may be set as "the emotion to be expressed is A".

The two conditions may not be set, and instead only one condition may be set. Furthermore, the adjustment method of the line-of-sight direction when the reference direction is outside the specified range Cₚ set for the current line-of-sight direction may be limited to any one of the methods.

Next, a second embodiment of the present disclosure will be described.

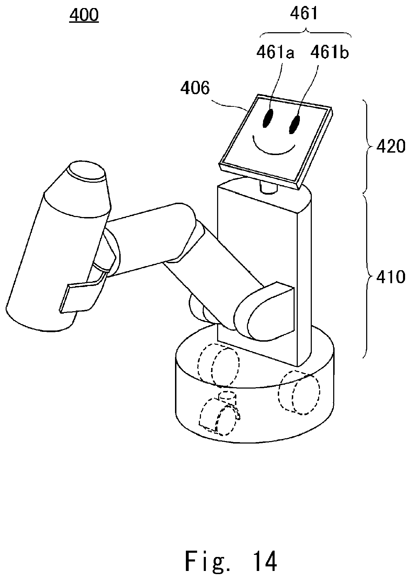

Fig. 14 is a schematic view of a robot 400 according to the second embodiment. The robot 100 according to the first embodiment is a communication robot that embodies a character. The robot 400 according to the second embodiment is also a communication robot further including a function as a transport robot that holds a transporting object and autonomously moves. There are increasing number of transport robots recently that share work spaces with humans, and ones that perform work while communicating with humans are also known. The robot 400 is a transport robot that is capable of executing communication like the robot 100.

A configuration related to the communication function of the robot 400 is almost the same as that of the robot 100, and thus the differences between the robots 100 and 400 will be mainly described. In a functional robot like a transport robot, a head part and a body part do not necessarily mimic the form of a human being or an animal. As shown in the drawing, a body part 410 of the robot 400 has a semicylindrical shape and a head part 420 of the robot 400 is composed almost only of a display panel 406. A face image including a black eye image 461 is displayed on the display panel 406. Further, the display panel 406 as the head part 420 is rotated in the yaw axis direction θ_{y} and the pitch axis direction θ_{z} direction with respect to the body part 410.

Like the robot 100, the robot 400 configured in this way can direct the line-of-sight direction to the reference direction by changing the orientation of the head part 420 and the positions of the black eye images 461. Thus, even when the robot 400 has an appearance far different from the form of a human or an animal, the user working with the robot 400 can communicate like he/she is communicating with the robot 100. Furthermore, the user can experience more natural eye movements of the robot 400.

The present disclosure has been described through the first and second embodiments, but the aspect of the robot is not limited to these embodiments. In the above embodiments, the reference direction of the user who the robot communicates with is decided by analyzing the image signal acquired by the camera 102. However, the method of deciding the reference direction is not limited to this, and instead, for example, a direction of utterances may be defined as the reference direction using a stereo microphone as the microphone 101. An environment sensor and an arithmetic unit for deciding the reference direction may be included in an external apparatus, because the line-of-sight control unit 203 only needs to acquire the reference direction. In this case, the line-of-sight control unit 203 may acquire the reference direction via a communication IF. In such a configuration, the communication IF functions as an acquisition unit for acquiring the reference direction.

In the above embodiments, the robot including the eyeball parts of the eyes has been described. However, the robot may include a monocular eyeball part or three or more eyeball parts. A line-of-sight direction of such an eyeball part can be determined. Further, in the above example, the eyeball part 122 with the optical fiber bundle 132 included therein has been described, but a curved display panel may be employed as the eyeball part 122 without including the optical fiber bundle 132 or the like. Put more simply, a flat display panel may be employed as the eyeball part 122. Further, the eyeball part is not limited to being achieved by a display panel and instead, for example, the eyeball part may be in a form in which a ball on which black eye is drawn is rotated by a motor. A change in a position of the black eye in such a case is achieved by rotation of the ball by the motor. Although the robot 400 according to the second embodiment displays the eyes on one display panel, it is also possible to display eyebrows, a nose, and a mouth in addition to the eyes, and to change these parts in conjunction with the line-of-sight direction. In this case, the line-of-sight control unit 203 controls a display mode of the entire display panel.

In the above embodiments, the examples of Figs. 8 and 9 have been described as the line-of-sight adjustment when the reference direction is not present inside the specified range Cₚ. However, the line-of-sight adjustment may be carried out regardless of whether the reference direction is inside or outside the specified range Cₚ. That is, a method of changing the positions of the black eye images 161 without changing the orientation of the head part 120 until halfway through the adjustment, and then changing both the orientation of the head part 120 and the positions of the black eye images 161 to adjust the line-of-sight direction can be executed even when the current line-of-sight direction is close to the reference direction. Likewise, a method of changing both the orientation of the head part 120 and the positions of the black eye images 161 until halfway through the adjustment, and then changing the positions of the black eye images 161 without changing the orientation of the head part 120 to adjust the line-of-sight direction can also be executed even when the current line-of-sight direction is close to the reference direction. Such a movement in the line-of-sight can be employed according to the balance between emotions and expressions desired to express.

Further, the reference direction to be set may not be a midpoint between the eyes of the user. There may be a case of "looking away" as an example of expressions to be expressed. In such a case, the line-of-sight control unit 203 sets a point away from the eyes of the user as the reference direction.

The program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (compact disc read only memory), CD-R (compact disc recordable), CD-R/W (compact disc rewritable), and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line (e.g. electric wires, and optical fibers) or a wireless communication line.

From the disclosure thus described, it will be obvious that the embodiments of the disclosure may be varied in many ways. Such variations are not to be regarded as a departure from the spirit and scope of the disclosure, and all such modifications as would be obvious to one skilled in the art are intended for inclusion within the scope of the following claims.

## Claims

1. A communication robot comprising:
a body part (110);
a head part (120) configured to be able to change its orientation with respect to the body part;
an eyeball part (122a, 122b) provided on the head part and configured to be able to change a position of a black eye (161a,161b);
a control unit (203) configured to control a line-of-sight direction by changing at least one of the orientation of the head part and the position of the black eye; and
an acquisition unit (202) configured to acquire a reference direction of a communication target, wherein
in order to direct the line-of-sight direction to the reference direction, the control unit can execute one of first control and second control, in which in the first control, the control unit directs the line-of-sight direction to the reference direction by changing the position of the black eye without changing the orientation of the head part and then changing both the orientation of the head part and the position of the black eye, and in the second control, the control unit directs the line-of-sight direction to the reference direction by changing both the orientation of the head part and the position of the black eye and then changing the position of the black eye without changing the orientation of the head part.

2. The communication robot according to Claim 1, wherein when the reference direction is included in a specified range previously determined for a current line-of-sight direction, the control unit directs the line-of-sight direction to the reference direction by changing the position of the black eye without changing the orientation of the head part, whereas when the reference direction is not included in the specified range, the control unit directs the line-of-sight direction to the reference direction by executing the first control or the second control.

3. The communication robot according to any one of Claims 1 to 2, further comprising an utterance unit (207,109) configured to utter to the communication target, wherein the control unit directs the line-of-sight direction to the reference direction at a timing when the utterance unit starts uttering.

4. The communication robot according to any one of Claims 1 to 3, further comprising a detection unit (101,201) configured to detect an utterance of the communication target, wherein the control unit directs the line-of-sight direction to the reference direction at a timing when the detection unit detects the utterance of the communication target.

5. The communication robot according to any one of Claims 1 to 4, wherein when both the orientation of the head part and the position of the black eye are changed, the control unit controls the orientation of the head part and the position of the black eye in such a way that the orientation of the head part follows the line-of-sight direction after a delay.

6. A control program for controlling a communication robot comprising a body part (110), a head part (120) configured to be able to change its orientation with respect to the body part, and an eyeball part (122a,122b) provided on the head part and configured to be able to change a position of a black eye (161a,161b), the control program causing a computer to execute:
acquiring a reference direction of a communication target; and
directing a line-of-sight direction determined by the orientation of the head part and the position of the black eye to the reference direction by changing the position of the black eye without changing the orientation of the head part and then changing both the orientation of the head part and the position of the black eye.

7. A control program for controlling a communication robot comprising a body part (110), a head part (120) configured to be able to change its orientation with respect to the body part, and an eyeball part (122a,122b) provided on the head part and configured to be able to change a position of a black eye (161a,161b), the control program causing a computer to execute:
acquiring a reference direction of a communication target; and
directing a line-of-sight direction determined by the orientation of the head part and the position of the black eye to the reference direction by changing both the orientation of the head part and the position of the black eye and then changing the position of the black eye without changing the orientation of the head part.
